# EUROPEAN PATENT APPLICATION

(11) **EP 4 657 348 A1**
(43) Date of publication of application: **03.12.2025**
(21) Application number: 25179323.8
(22) Date of filing: 28.05.2025
(51) Int. Cl.: G06Q 10/0631, G06Q 10/10

(54) **ELECTRONIC APPARATUS AND CONTROL METHOD THEREOF, INFORMATION PROCESSING APPARATUS, CONTROL METHOD, PROGRAM, AND STORAGE MEDIUM**

(30) Priority: 30.05.2024 JP 2024088280
(71) Applicant: CANON KABUSHIKI KAISHA, Tokyo 146-8501 (JP)
(72) Inventor: GOTO, Hiroaki, Tokyo,, 146-8501 (JP)
(74) Representative: TBK

(57) **Abstract**

An electronic apparatus comprises: acquisition means configured to acquire a shooting plan; shooting means configured to perform shooting and output image data; linking means configured to link the shooting plan and the image data obtained by performing shooting by the shooting means according to the shooting plan; and transmission means configured to transmit the image data to which the shooting plan is linked.

## Description

### TECHNICAL FIELD

### Field of the Technology

The present disclosure relates to an electronic apparatus and a control method thereof, an information processing apparatus, a control method, a program, and a storage medium, and more particularly to a technique for supporting linking of shot image data to a reporting plan.

### BACKGROUND

Conventionally, when conducting news interviews, a reporting support system has been provided that allows a planner and a reporter to plan in advance the equipment to be used, such as cameras, reporters, location, date and time, and content, and then share the plan between the planner and the reporter to conduct the interview efficiently.

Furthermore, in a reporting support system, it is expected to facilitate management of image data by linking image data captured during reporting with a reporting plan. For example, Japanese Patent Laid-Open No. 2023-127311 discloses a method of importing video data from a camera into a reporting support apparatus, and linking the video data with the reporting plan in a case where data included in the video data (camera manufacturing ID, shooting time, shooting location) corresponds to the reporting plan in the reporting support apparatus.

However, the method described in Japanese Patent Laid-Open No. 2023-127311 cannot always link the video data and the reporting plan efficiently. For example, in a case where a plurality of interviews are conducted using one camera, linking the video data and the reporting plans becomes complicated. Thus, in a system that links and manages image data and a reporting plan, when one camera is used to shoot images corresponding to a plurality of reporting plans, the photographer may be required to take time to link the image data and the reporting plans.

This problem is not limited to reporting plans, but also occurs when shooting is performed according to predetermined shooting plans.

### SUMMARY

The present disclosure has been made in consideration of the above situation, and makes it possible to efficiently link image data obtained by shooting with shooting plans.

The present disclosure in its first aspect provides an electronic apparatus as specified in claim 1. Optional features are specified in claims 2 to 9.

The present disclosure in its second aspect provides an information processing apparatus as specified in claim 10. Optional features are specified in claims 11 and 12.

The present disclosure in its third aspect provides a control method of an electronic apparatus as specified in claim 13.

The present disclosure in its fourth aspect provides a control method as specified in claim 14.

The present disclosure in its fifth aspect provides a program as specified in claim 15.

The present disclosure in its sixth aspect provides a computer-readable storage medium as specified in claim 16.

Features of the present disclosure will become apparent from the following description of embodiments with reference to the attached drawings. The following description of embodiments are described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
FIG. 1 is a block diagram illustrating an example of a configuration of a reporting support system according to an embodiment of the present disclosure.
FIG. 2 is a block diagram illustrating a functional configuration of a camera according to the embodiment.
FIG. 3 is a block diagram illustrating a functional configuration of an information processing apparatus used as a system, server and terminal according to the embodiment.
FIG. 4 is a sequence diagram illustrating a flow of processing performed in the reporting support system according to an embodiment.
FIG. 5 is a diagram illustrating an example of a user interface displayed in a camera management system according to the embodiment.
FIG. 6A is a diagram illustrating an example of a user interface displayed in a reporting planning system according to the embodiment.
FIG. 6B is a diagram illustrating an example of reporting plan data transmitted from the reporting planning system to the camera management system according to the embodiment.
FIG. 7 is a diagram illustrating an example of a user interface displayed on a camera management terminal according to the embodiment.
FIGS. 8A and 8B are diagrams illustrating an example of a data configuration of image data and a data configuration of shooting information according to the embodiment.
FIG. 9 is a flowchart illustrating processing performed in the camera according to the embodiment.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

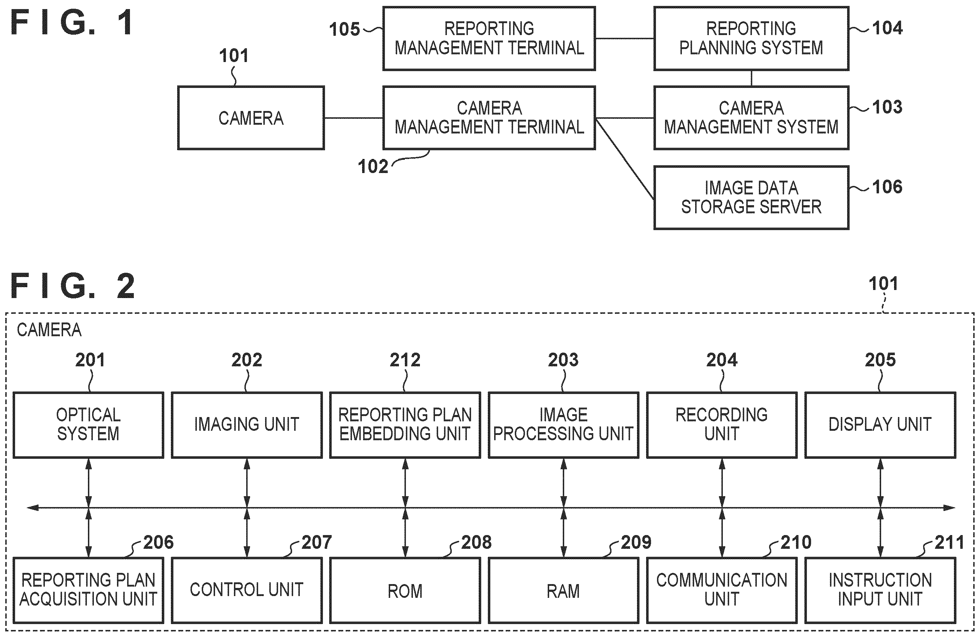

FIG. 1 is a diagram illustrating an example of a configuration of a reporting support system according to an embodiment. The reporting support system includes a camera 101 for taking images during reporting. The camera 101 may be, for example, a digital still camera, a digital video camera, or any other electronic device with a shooting function. Examples of electronic devices include information processing apparatuses such as tablet devices and personal computers with a camera function, mobile phones, smartphones, robots, drones, and the like.

The reporting support system includes a camera management terminal 102, a camera management system 103, a reporting planning system 104, a reporting management terminal 105, and an image data storage server 106 to support the linking of the captured image data to a reporting plan. The image data includes, for example, moving image data. An information processing terminal such as a smartphone, a tablet device, or a personal computer, for example, may be used as the camera management terminal 102 and the reporting management terminal 105.

Next, the functional configuration of the camera 101 will be described with reference to FIG. 2.

An optical system 201 is made up of a group of lenses including a zoom lens and a focus lens, and forms an image of a subject on the imaging surface of an imaging unit 202. The optical system 201 is provided with operating members (not shown) that allow a user to directly operate and control the zoom position and focus position of the optical system 201.

The imaging unit 202 includes an image sensor such as a CCD or CMOS sensor, and photoelectrically converts an optical image formed by the optical system 201 on the imaging surface of the imaging unit 202. The obtained analog image signal is then converted into digital image data using an A/D converter (not shown), and then output it as RAW image data. The RAW image data output from the imaging unit 202 is temporarily stored in a RAM 209.

An image processing unit 203 applies various image processing such as white balance adjustment, color interpolation, gamma processing, and noise reduction processing to the RAW image data stored in the RAM 209, and generates image data.

A control unit 207 is, for example, a CPU, which reads out a control program for each block included in the camera 101 from a ROM 208, loads the program in a RAM 209, and executes the program. In this way, the control unit 207 controls the operation of each block included in the camera 101.

The ROM 208 is an electrically erasable and recordable non-volatile memory, and stores operation programs for each block of the camera 101 as well as parameters and the like required for the operation of each block.

The RAM 209 is a rewritable volatile memory, and is used for loading programs executed by the control unit 207 and the like, and for temporarily storing data generated by the operation of each block of the camera 101, and the like.

A recording unit 204 is a removable memory card, or the like. The recording unit 204 records the image data processed by the image processing unit 203 as an image to be recorded via the RAM 209.

A display unit 205 is a display device such as an LCD, and displays images stored in the RAM 209 and images recorded in the recording unit 204, and a user interface for receiving instructions from the user.

An instruction input unit 211 is a touch panel or operation buttons, and inputs instructions from the user. By configuring a touch panel on the display unit 205, it is possible to input instructions according to the user interface displayed on the display unit 205. The instruction input unit 211 is also provided with a shutter button (not shown), and the user can issue instructions for capturing an image by, for example, a switch SW1 that is turned ON by pressing the shutter button halfway, and a switch SW2 that is turned ON by pressing the shutter button all the way.

A communication unit 210 is for communicating with external apparatuses including the camera management terminal 102 and the reporting management terminal 105. For example, the communication unit 210 transmits the serial number of the camera 101 and image data recorded in the recording unit 204 to the camera management terminal 102, and receives a reporting plan (described later) from the camera management terminal 102 or the reporting management terminal 105.

A reporting plan acquisition unit 206 acquires a reporting plan via the communication unit 210.

A reporting plan embedding unit 212 embeds data representing the reporting plan acquired by the reporting plan acquisition unit 206 into image data captured based on the reporting plan, and records the resultant data in the recording unit 204.

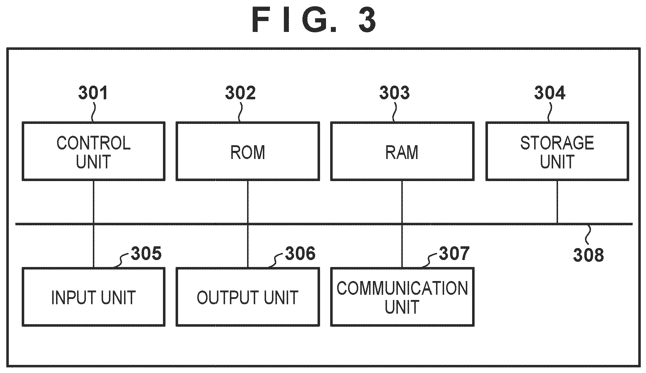

FIG. 3 is a diagram illustrating a general functional configuration of apparatuses used as the camera management terminal 102, the camera management system 103, the reporting planning system 104, the reporting management terminal 105, and an image data storage server 106. There are various possible forms of the actual apparatus having the configuration shown in FIG. 3, but in this description, they will be collectively referred to as an information processing apparatus.

In the information processing apparatus shown in FIG. 3, a control unit 301 is, for example, a CPU, which reads out a control program for each block of the information processing apparatus from a ROM 302, and loads the program in a RAM 303 and executes it. In this way, the control unit 301 controls the operation of each block of the information processing apparatus.

The ROM 302 is an electrically erasable and recordable non-volatile memory, and stores operation programs for each block of the information processing apparatus as well as parameters and the like required for the operation of each block.

The RAM 303 is a rewritable volatile memory, and is used for loading programs executed by the control unit 301 and the like, and for temporarily storing data generated by the operation of each block of the information processing apparatus.

A storage unit 304, together with the ROM 302, stores the operation programs for each block of the information processing apparatus as well as parameters and the like required for the operation of each block. In a case where the information processing apparatus is used as the image data storage server 106, the storage unit 304 is configured with a storage having a large capacity and stores image data sent from the camera management terminal 102.

An input unit 305 includes an operating member and a connection unit to an external operating member, and accepts operations by the user.

An output unit 306 includes a display unit and a connection unit to an external display apparatus.

A communication unit 307 is for communicating with external devices including the camera 101 and the camera management system 103.

The control unit 301, ROM 302, RAM 303, storage unit 304, input unit 305, output unit 306, and communication unit 307 are connected to one another via a bus 308 and are configured to be operable from an application program.

The control unit 301 reads the OS and application programs from the storage unit 304 or ROM 302, loads them into the RAM 303, and executes them, thereby carrying out various processes and realizing the functions of this embodiment described below. The application programs acquire user input from the input unit 305. Furthermore, the control unit 301 outputs information to the output unit 306 and display the processing results. The control unit 301 also communicates with other computers, servers, devices, etc. connected to a network via the communication unit 307.

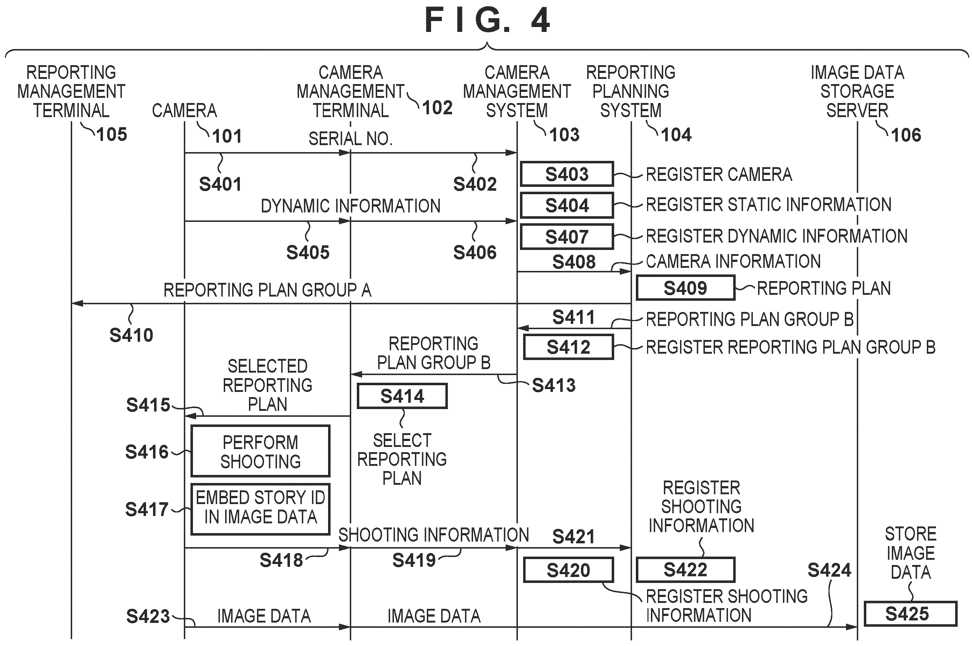

Next, the processing in the reporting support system of this embodiment will be described with reference to FIG. 4 to FIG. 8B. FIG. 4 is a sequence diagram illustrating the processing for supporting the linking of a reporting plan to image data in this embodiment.

Note that, prior to the processing of this sequence, a user who uses the reporting support system of this embodiment must register user information. As an example of a registration method, first, the camera 101 transmits a serial number (information identifying the camera 101) to the reporting management terminal 105, and the user inputs the user name (photographer) of the camera 101 corresponding to this serial number in the reporting management terminal 105. Then, the user information consisting of the serial number and user name (photographer) of the camera 101 is transmitted to the reporting planning system 104 and registered. Note that, in a case where one user uses a plurality of cameras, user information should be registered for each camera.

First, the flow of registering the camera 101 in the camera management system 103 and the reporting planning system 104 will be described.

In step S401, the camera 101 transmits the serial number of the camera 101 to the camera management terminal 102, and in step S402, the camera management terminal 102 transmits the serial number of the camera 101 to the camera management system 103. In step S403, the camera management system 103 registers the camera 101 with the received serial number, and further in step S404, the camera management system 103 registers information such as a camera ID (identification information) and a camera name of the registered camera 101. At this time, the camera management system 103 searches for the serial number, and if there is a history of the camera having registered in the past, the same camera ID and camera name may be used, or a new camera ID and camera name may be registered. The camera ID is automatically generated by the camera management system 103, but the camera name may be automatically generated by the camera management system 103, or an arbitrary name may be registered by the user of the camera management system 103. Hereinafter, the serial number, camera ID, and camera name will be collectively referred to as "static information."

Next, in step S405, the camera 101 transmits dynamic information of the camera, such as location information of the camera 101 (latitude, longitude, altitude), the location information update time, status information indicating the state of the camera 101 (power supply, connection), and the status information update time, to the camera management terminal 102. In step S406, the camera management terminal 102 transmits the dynamic information of the camera 101 to the camera management system 103. At this time, if the location information of the camera 101 cannot be obtained from the camera 101, the location information of the camera management terminal 102 may be transmitted as the dynamic information of the camera 101. Then, in step S407, the camera management system 103 registers the dynamic information with respect to the camera registered in step S404. Note that, if the camera is registered using the history in step S404, the past dynamic information is updated with the dynamic information transmitted in step S406.

In step S408, the camera management system 103 transmits to the reporting planning system 104 camera information consisting of the newly registered or updated static information and dynamic information of the camera 101.

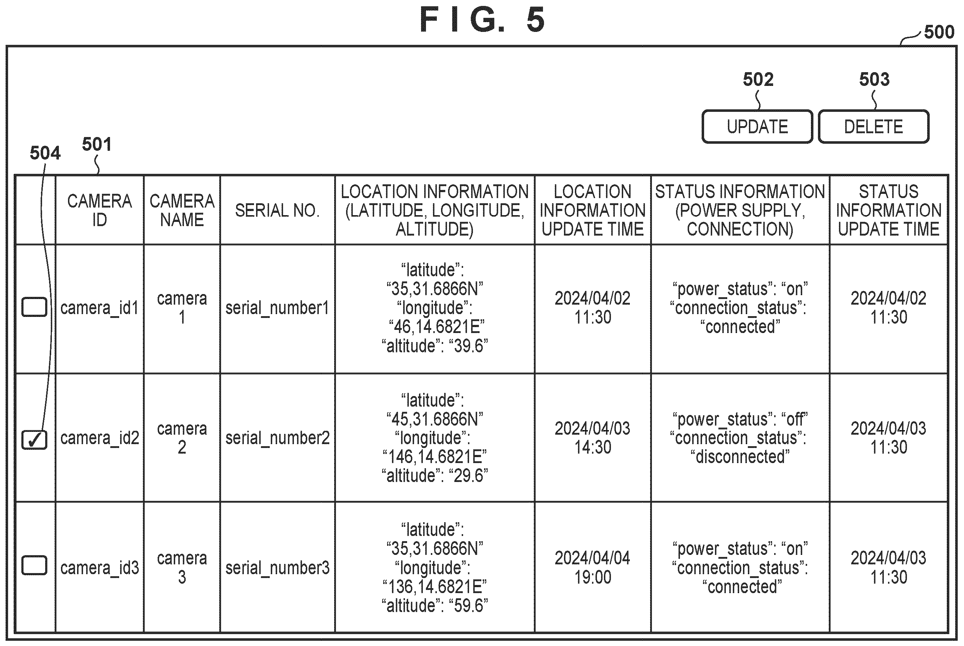

FIG. 5 shows an example of a UI screen 500 displayed on the output unit 306 of the camera management system 103, including a list 501 of camera information registered in the camera management system 103. The camera management system 103 manages a plurality of cameras including the camera 101, and FIG. 5 shows an example in which three cameras with serial numbers of serial_number1, serial_number2, and serial_number3 are registered.

In the list 501 of camera information, the camera information of each registered camera is displayed, and each piece of camera information includes the camera ID, camera name, serial number, location information, location information update time, status information, and status information update time.

Check boxes 504 are provided for each item in the list 501 of camera information. A user of the camera management system 103 can select a camera using the check boxes 504 and press an update button 502 to change the camera name among the camera information selected by the check box 504. In addition, by pressing a delete button 503, the camera information selected by the check box 504 can be deleted.

Next, a flow of shooting an image using the camera 101 based on the reporting plan and registering the obtained image data will be described.

When the camera information is transmitted to the reporting planning system 104, in step S409, a planner creates a reporting plan while checking the camera information and user information held by the reporting planning system 104, and registers it in the reporting planning system 104. Note that in the reporting planning system 104, not only the camera information transmitted from the camera management system 103 but also camera information of various cameras is registered, and the planner creates a reporting plan using that information.

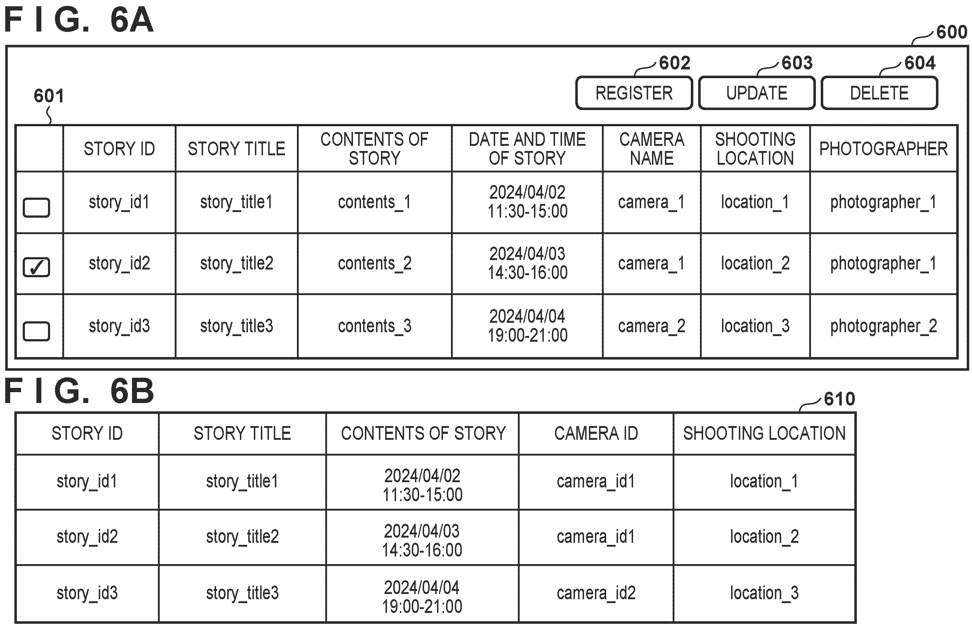

FIG. 6A shows an example of a UI screen 600 displayed on the output unit 306 of the reporting planning system 104, including a list 601 of reporting plans registered in the reporting planning system 104. Here, an example is shown in which reporting plans using cameras with camera names of camera_1 and camera_2 managed by the camera management system 103 are registered.

In the UI screen 600 shorn in FIG. 6A, a new reporting plan can be registered by pressing a register button 602. Also, a check box is provided for each item in a list 601 of reporting plans. A user of the reporting planning system 104 can change the reporting plan whose check box 605 is checked by selecting a reporting plan using the check box 605 and pressing an update button 603. Also, a reporting plan selected by checking the check box 605 can be deleted by pressing a delete button 604.

In step S410, the reporting planning system 104 transmits, from among the registered reporting plans, the reporting plan or plans linked to a photographer to a reporting management terminal linked to that photographer. For example, to the reporting management terminal 105 linked to photographer_1, reporting plans with story IDs (identification information) of story_id1 and story_id2 linked to photographer_1 are transmitted. Similarly, to the reporting management terminal linked to photographer_2, a reporting plan with a story ID of story_id3 is transmitted. Hereinafter, a group of reporting plans transmitted to the reporting management terminal 105 will be referred to as "reporting plan group A."

On the other hand, in step S411, the reporting planning system 104 transmits, to the camera management system 103, of the reporting plans, those that correspond to the cameras managed by the camera management system 103. For example, in a case where the reporting plans shown in FIG. 6A are registered in the reporting planning system 104 and the camera management system 103 manages cameras whose camera names are camera_1 and camera_2, information indicating three reporting plans with story IDs of story_id1, story_id2, and story_id3 are transmitted to the camera management system 103. Hereinafter, the information indicating the reporting plans transmitted to the camera management system 103 will be referred to as "reporting plan group B".

FIG. 6B is a diagram showing an example of data 610 of the reporting plan group B sent from the reporting planning system 104 to the camera management system 103, and is composed of story ID, story title, date and time of story, camera ID, and shooting location. Note that the camera serial number may be included instead of the camera ID, or both the camera ID and the serial number may be included.

In step S412, the camera management system 103 registers the received reporting plan group B. When the reporting plan group B is registered in the camera management system 103, the camera use reservation is completed. In step S413, the camera management system 103 transmits the reporting plan or plans linked to the camera 101 from the received reporting plan group B to the camera management terminal 102 linked to the camera 101. For example, in a case where the camera ID of the camera 101 is camera_id1, from the reporting plan group B registered in the camera management system 103, two reporting plans having story IDs of story_id1 and story_id2 corresponding to camera_id1 are transmitted to the camera management terminal 102. Similarly, the camera management system 103 transmits one reporting plan from the reporting plan group B, having the story ID of story_id3 corresponding to the camera ID of camera_id2, to the camera management terminal corresponding to camera_id2.

In step S414, the photographer selects a reporting plan for which shooting is to be performed from among the transmitted reporting plans at the camera management terminal 102. In step S415, the camera management terminal 102 transmits to the camera 101 the selected reporting plan for which shooting is to be performed.

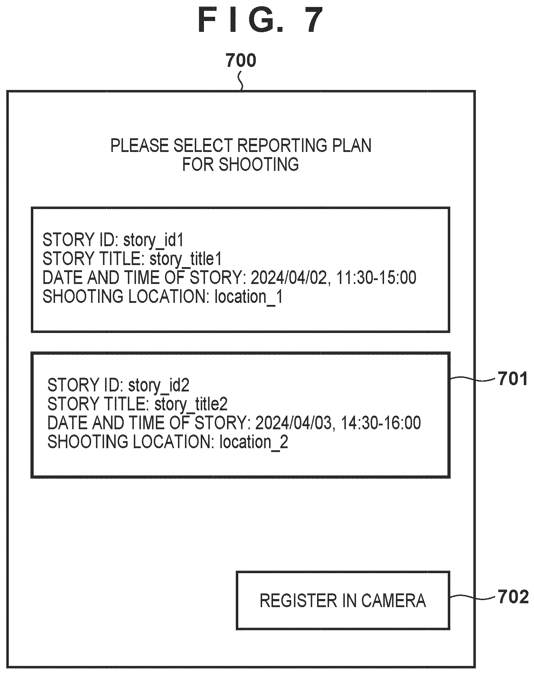

FIG. 7 shows an example of a UI screen 700 for selecting a reporting plan at the camera management terminal 102. The UI screen 700 displays story IDs, story titles, dates and times of stories, and shooting locations based on the reporting plans transmitted from the camera management system 103. Here, reporting plans with story IDs of story_id1 and story_id2 are displayed. Among the reporting plans displayed on the UI screen 700, a reporting plan can be selected by operating the input unit 305 to move a selection frame 701 to select a reporting plan and pressing a "register in camera" button 702. Then, the story ID, story title, date and time of story, and shooting location of the selected reporting plan (story_id2 in the example shown in FIG. 7) are transmitted from the camera management terminal 102 to the camera 101.

In the above example, the reporting plan is selected at the camera management terminal 102, but the reporting plan may be selected at the reporting management terminal 105. In that case, for example, the reporting plan group A linked to a photographer is displayed on the reporting management terminal 105 in a format as shown in the UI screen 700 in FIG. 7, and the reporting plan is selected using the selection frame 701. It should be noted that, since a plurality of cameras may be linked to the reporting management terminal 105, the reporting plan is transmitted to the camera registered in the selected reporting plan information.

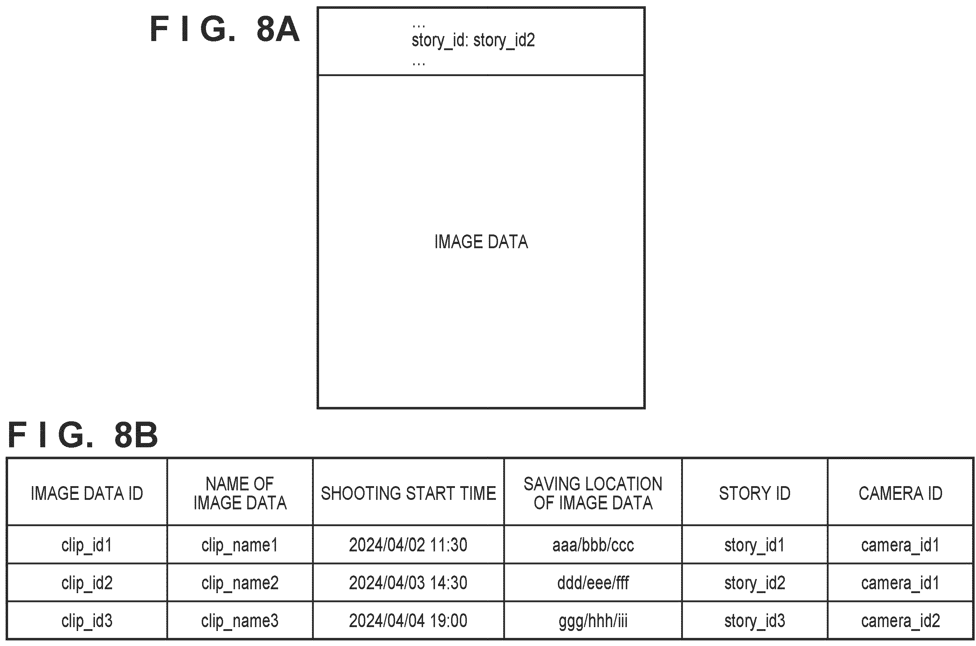

In step S416, the photographer shoots an image (video) based on the selected reporting plan using the camera 101. In step S417, the story ID (story_id2 in the example shown in FIG. 7) or story title (story_title2 in the example shown in FIG. 7) of the selected reporting plan is embedded in the image data shot by the camera 101. FIG. 8A is a diagram illustrating an example of the data configuration in a case where the story ID is embedded in the image data.

It should be noted that the reporting plan may be embedded in an additional data portion that is added to the image data, not only part of the information such as the story ID or story title of the reporting plan. By embedding the reporting plan in the additional data portion, the reporting plan can also be checked together with information such as the resolution and exposure information included in the additional data, which makes the management of the image data more efficient.

In step S418, the camera 101 transmits the shooting information to the camera management terminal 102. FIG. 8B shows an example of the shooting information. The shooting information is composed of image data ID, name of image data, shooting start time, saving location of image data, story ID, and camera ID. Then, in step S419, the camera management terminal 102 transmits the shooting information to the camera management system 103, and in step S420, the camera management system 103 registers the shooting information. Furthermore, in step S421, the camera management system 103 transmits the shooting information to the reporting planning system 104, and in step S422, the reporting planning system 104 registers the shooting information.

In step S423, the camera 101 transmits the image data with the information of reporting plan embedded therein to the camera management terminal 102. In step S424, the camera management terminal 102 transmits the image data to the image data storage server 106. At this time, the camera management terminal 102 may transmit the image data to the camera management system 103 instead of the image data storage server 106. In step S425, the image data storage server 106 stores the image data.

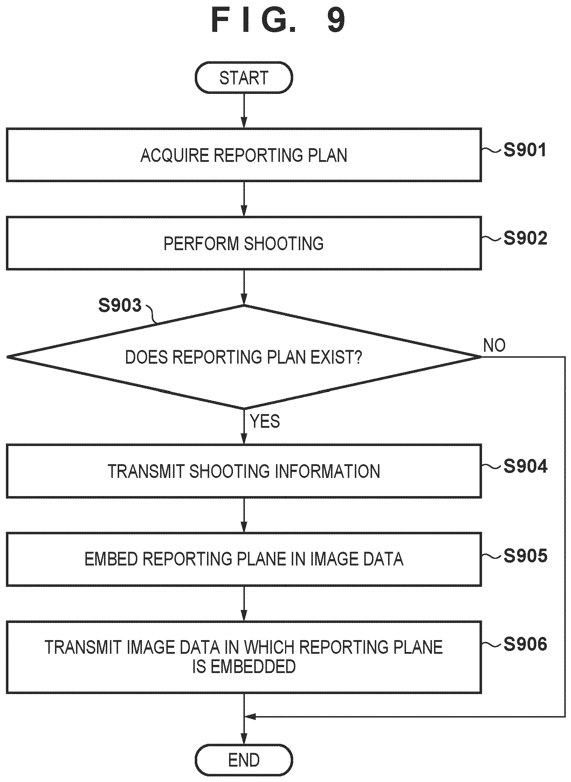

FIG. 9 is a flowchart illustrating the processing performed by the camera 101 in steps S415 to S417.

First, in step S901, the reporting plan acquisition unit 206 acquires the reporting plan sent from the camera management terminal 102 via the communication unit 210. This processing corresponds to step S415. Then, in the next step S902, an image is captured by the imaging unit 202. This processing corresponds to step S416. In step S903, the control unit 207 determines whether a reporting plan exists. If no reporting plan exists, the processing ends. Although not shown in FIG. 9, the image data may be recorded in the recording unit 204.

On the other hand, if a reporting plan exists, the process proceeds to step S904, where the control unit 207 transmits the shooting information to the camera management terminal 102 via the communication unit 210. This process corresponds to step S418. In addition, in step S905, the reporting plan embedding unit 212 embeds the reporting plan in the image data obtained from the imaging unit 202. This process corresponds to step S417. Note that, although the order is different from that shown in FIG. 4, the order of the process of step S904 and the process of step S905 may be reversed or may be performed in parallel. In step S906, the image data in which the reporting plan is embedded by the reporting plan embedding unit 212 is transmitted to the camera management terminal 102 via the communication unit 210. This process corresponds to step S423. After this, the processing ends.

Through the above processing, the camera 101 can easily add data indicating a reporting plan to image data obtained by shooting, and can notify the reporting planning system 104 of the saving location of image data corresponding to the reporting plan. This allows an editor to access the reporting planning system 104 to obtain the reporting plan to be edited, and to obtain image data from the image data storage server 106 based on the shooting information linked to the reporting plan, enabling efficient editing.

As described above, according to this embodiment, it is possible to improve the efficiency of reporting work.

In the above-described embodiment, as shown in FIG. 1, the camera management terminal 102 and the reporting management terminal 105 are described as independent apparatuses, but one terminal may be configured to have the functions of both the camera management terminal 102 and the reporting management terminal 105. Further, the camera 101 and the camera management terminal 102 may be configured as an integrated apparatus, and it is also possible to configure the camera 101, the camera management terminal 102, and the reporting management terminal 105 as a single apparatus.

In addition, in the above-described embodiment, the camera 101 captures images based on a reporting plan. However, the present disclosure can be applied not only to reporting but also to cases where images are captured according to a predetermined shooting plan.

### <Other Embodiments>

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An electronic apparatus comprising:
acquisition means configured to acquire a shooting plan;
shooting means configured to perform shooting and output image data;
linking means configured to link the shooting plan and the image data obtained by performing shooting by the shooting means according to the shooting plan; and
transmission means configured to transmit the image data to which the shooting plan is linked.

2. The electronic apparatus according to claim 1, wherein the linking means links at least a part of information constituting the shooting plan to the image data.

3. The electronic apparatus according to claim 1, wherein information that constitutes the shooting plan includes identification information of the shooting plan, title, date and time of shooting, shooting location, and information for identifying an electronic device that performs shooting, and the linking means links at least the identification information or the title of the shooting plan to the image data.

4. The electronic apparatus according to claim 2 or 3, wherein the linking means embeds at least a part of the information constituting the shooting plan in the image data.

5. The electronic apparatus according to claim 2 or 3, wherein the linking means embeds at least a part of the information constituting the shooting plan in an additional data portion of the image data.

6. The electronic apparatus according to any one of claims 1 to 5 further comprising determination means configured to determine whether or not the shooting by the shooting means corresponds to the shooting plan acquired by the acquisition means,
wherein in a case where the determination means determines that the shooting corresponds to the shooting plan, the linking means links the image data obtained by the shooting and the shooting plan.

7. The electronic apparatus according to any one of claims 1 to 6, wherein
the acquisition means receives the shooting plan from an external information processing apparatus, and
the transmission means transmits shooting information including a storage destination of the image data obtained by shooting based on the shooting plan and information linking the image data and the shooting plan to the information processing apparatus.

8. The electronic apparatus according to claim 7, wherein the transmission means further transmits information identifying the electronic apparatus, location information, and information indicating a state to the information processing apparatus prior to obtaining the shooting plan.

9. The electronic apparatus according to any one of claims 1 to 8, wherein the electronic apparatus is a digital still camera.

10. An information processing apparatus comprising:
communication means configured to communicate with an external electronic apparatus having a shooting function and an external information processing apparatus;
management means configured to manage information obtained from the electronic apparatus and the external information processing apparatus; and
control means configured to control the communication means,
wherein the control means
outputs information of the electronic apparatus to the external information processing apparatus,
based on a shooting plan transmitted from the external information processing apparatus, transmits information of the shooting plan to the electronic apparatus to be used for shooting,
receives from the electronic apparatus shooting information including a storage destination of image data obtained by shooting based on the shooting plan and information linking the image data and the shooting plan, and transmits the shooting information to the external information processing apparatus.

11. The information processing apparatus according to claim 10, wherein the information of the electronic apparatus includes information for identifying the electronic apparatus, location information, and information indicating a state.

12. The information processing apparatus according to claim 10 or 11 further comprising storage means configured to store the image data and information linking the image data and the shooting plan received from the electronic apparatus.

13. A control method of an electronic apparatus comprising:
an acquisition step of acquiring a shooting plan;
a shooting step of performing shooting and outputting image data;
a linking step of linking the image data and the shooting plan; and
a transmission step of transmitting the image data to which the shooting plan is linked.

14. A control method for controlling input and output of information obtained from an electronic apparatus having a shooting function and an information processing apparatus via communication means, the method comprising:
a step of acquiring information of the electronic apparatus and outputting the information to the information processing apparatus,
a step of, based on a shooting plan transmitted from the information processing apparatus, transmitting information of the shooting plan to the electronic apparatus to be used for shooting,
a step of receiving from the electronic apparatus shooting information including a storage destination of image data obtained by shooting based on the shooting plan and information linking the image data and the shooting plan, and transmitting the shooting information to the information processing apparatus.

15. A program comprising instructions which, when the program is executed by a computer, cause the computer to carry out the method of claim 13 or 14.

16. A computer-readable storage medium storing the program according to claim 15.
